# EUROPEAN PATENT APPLICATION

(11) **EP 2 866 369 A1**
(43) Date of publication of application: **29.04.2015**
(21) Application number: 13825582.3
(22) Date of filing: 31.07.2013
(51) Int. Cl.: H04L 1/00

(54) **USER EQUIPMENT TO USER EQUIPMENT COMMUNICATION METHOD AND DEVICE**

(30) Priority: 31.07.2012 CN 201210268817
(71) Applicant: Huawei Technologies Co., Ltd., Longgang District Shenzhen, Guangdong 518129 (CN)
(72) Inventor: WANG, Ke, Shenzhen Guangdong 518129 (CN); SHANG, Zheng, Shenzhen Guangdong 518129 (CN); ZHANG, Jianwei, Shenzhen Guangdong 518129 (CN)
(74) Representative: Epping - Hermann - Fischer
(86) International application number: PCT/CN2013/080497
(87) International publication number: WO 2014/019510

(57) **Abstract**

Embodiments of the present invention are applicable to the field of wireless communications technologies, and provide a device-to-device communication method and device. The method includes: receiving, by a base station, a device capability indication of a user equipment; sending a base station capability indication to the user equipment; establishing a first transmission channel, where the first transmission channel is established in a mode network that is supported by the base station serving the user equipment, and is used to transmit device-to-device communication control information to the user equipment; and sending the device-to-device communication control information to the user equipment through the first transmission channel, so that the user equipment performs transmission of a device-to-device communication signal with another user equipment according to the device-to-device communication control information.

## Description

This application claims priority to Chinese Patent Application No. 201210268817.8, filed with the Chinese Patent Office on July 31, 2012 and entitled "METHOD AND DEVICE FOR DEVICE-TO-DEVICE COMMUNICATION", which is incorporated herein by reference in its entirety.

### TECHNICAL FIELD

The present invention relates to the field of wireless communications technologies, and in particular, to a method and a device for device-to-device communication.

### BACKGROUND

An inevitable trend of a wireless cellular communications network in the future is towards a high rate, a large capacity, and higher QoS. How to effectively use a limited bandwidth resource to implement wireless broadband seems especially important. At present, a local service that rapidly develops in the mobile Internet, such as video/music sharing, urgently needs to be supported by introducing a new technology to an existing cellular network.

Conventional cellular mobile communications networks are controlled in a centralized manner; even if two user equipments are very adjacent, communication between the user equipments needs to be performed by using a base station and a core network. A centralized control system is convenient for resource management and interference control, but a disadvantage is increasingly obvious, that is, a resource utilization rate of the centralized control system is not very high in some scenarios. For example, even if two UEs are very adjacent, double resources are needed for communication, including air interface resources and base station backhaul resources.

In order to increase a utilization rate of an air interface spectrum, reduce a heavy load of a conventional cellular network, and obtain a higher system throughput, researches of device-to-device communication (Device-to-Device communication, D2D) in a cellular network draw ever-increasing attentions. A user equipment can directly perform data communication with another user equipment in a direct manner or under control of a base station while continuously maintaining communication that is performed by using the base station, thereby reducing occupation of an air interface resource and increasing a system throughput, and also decreasing a communication delay, lowering an interference level, and saving energy of the user equipment.

Application scenarios of a device-to-device communication technology are mostly types of local services, such as a multicast data service and a local file sharing service. In the multicast data service, a service provider, such as an organizer of a concert or another large-scale activity, needs to send data with same content to participants of a gathering; and the organizer can use the D2D communication technology to complete a service immediately and reliably. If local data (for example, a file, a photo, and a video) of a user needs to be shared between adjacent user equipments, D2D can also be used to establish a user equipment cluster to complete data sharing. In addition, services that the D2D can provide further include a cooperative multiplayer game in a mobile state, a mobile advertising service, a dating service, communication between vehicles, mobile relay, and the like.

Compared with a wireless local area network (Wireless Local Area Networks, WLAN) and Bluetooth that can support similar services and use an unauthorized frequency band, device-to-device communication in a cellular communications system is controlled by a base station and uses an authorized frequency band resource allocated by the base station, which can control a system interference level so as to obtain device-to-device communication with a high data rate, and can enjoy a mobile advantage brought by the cellular communications system. In addition, the D2D communication is transparent to a user equipment user, so that in the D2D communication, complex manual pairing and access point configuration do not need to be performed as those in the WLAN and Bluetooth, thereby improving user experience and facilitating promotion of a service.

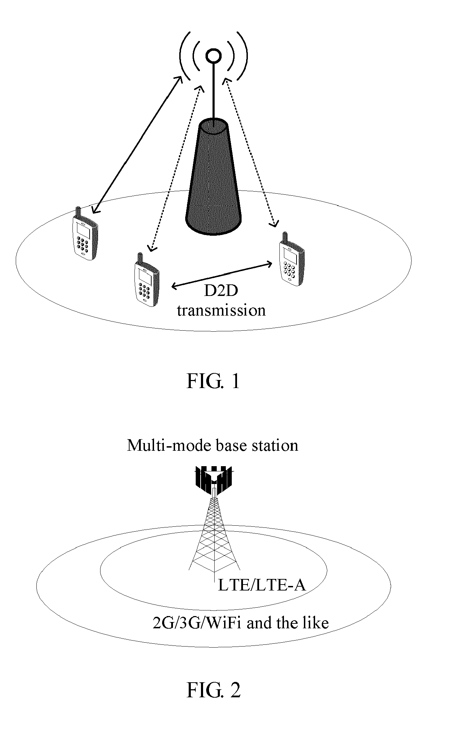

A typical D2D scenario is shown in FIG. 1. It can be seen from FIG. 1 that D2D communication is different from a self-organizing network significantly in that: Although data transmission of a user is directly performed between user equipments, management of a D2D link, including establishment of the link, allocation of a resource, and the like, is controlled and completed by a base station. It can be said that base station control signaling is a necessary condition for completing D2D transmission.

From the perspective of standardization, the design of a D2D system is based on an existing standard protocol. Typically, the D2D system can be designed based on the 3GPP Long Term Evolution Advanced LTE/Long Term Evolution Advanced LTE-A (Rel-10/11/12 or a later version), which is a single standard and is applicable to a network supporting a high-level protocol.

On the other hand, with advancement of technologies, a base station supporting multiple mode networks has been developed in the industry. Under this kind of base station , wireless networks with multiple modes can cover in an overlapping manner, as shown in FIG. 2.

User equipment technologies are also constantly developing. Emergence of multimode user equipment also enables a user equipment to hand over between networks with multiple modes. For a D2D technology, because the D2D technology is developed based on a specific access technology, communication can be performed only within network coverage of a corresponding technology. By using FIG. 2 as an example, a network shown in FIG. 2 is a long term evolution advanced (Long Term Evolution-Advanced, LTE-A) network. When a user is in a scenario of multi-network coverage, assuming that the user moves out of a range in which a D2D network is supported, D2D control signaling based on LTE-A cannot be transferred to a user equipment, and therefore, D2D transmission between users cannot be continuously performed, which limits an application range of D2D communication.

### SUMMARY

Embodiments of the present invention provide a method and a device for device-to-device communication, so as to solve a problem in the prior art that: in a D2D scenario, an application range of D2D is limited because control signaling cannot be transferred to a user equipment in a heterogeneous network.

According to one aspect, a device-to-device communication method is provided, where the method includes:
receiving, by a base station, a device capability indication of a user equipment, where the device capability indication indicates a capability of heterogeneous device-to-device communication transmission is supported by the user equipment;
sending, by the base station, a base station capability indication to the user equipment, where the base station capability indication indicates a capability of heterogeneous device-to-device communication transmissionis supported by the base station ;
establishing, by the base station, a first transmission channel, where the first transmission channel is established in a mode network that is supported by the base station serving the user equipment, and is used to transmit device-to-device communication control information to the user equipment, where the device-to-device communication control information is control signaling for controlling the user equipment to perform data exchange with another user equipment; and
sending, by the base station, the device-to-device communication control information to the user equipment through the first transmission channel, so that the user equipment performs transmission of a device-to-device communication signal with the another user equipment according to the device-to-device communication control information, where the device-to-device communication signal is data exchanged between the user equipment and the another user equipment.

According to another aspect, a base station is provided, where the base station includes:
a first capability receiving unit, configured to receive a device capability indication of a user equipment, where the device capability indication indicates a capability of heterogeneous device-to-device communication transmission is supported by the user equipment;
a first capability sending unit, configured to send a base station capability indication to the user equipment, where the base station capability indication indicates a capability of heterogeneous device-to-device communication transmission is supported by the base station;
a channel establishing unit, configured to establish a first transmission channel, where the first transmission channel is established in a mode network that is supported by the base station serving the user equipment, and is used to transmit device-to-device communication control information to the user equipment, where the device-to-device communication control information is control signaling for controlling the user equipment to perform data exchange with another user equipment; and
a control information transmitting unit, configured to send the device-to-device communication control information to the user equipment through the first transmission channel, so that the user equipment performs transmission of a device-to-device communication signal with the another user equipment according to the device-to-device communication control information, where the device-to-device communication signal is data exchanged between the user equipment and the another user equipment.

According to still another aspect, a device-to-device communication method is provided, where the method includes:
receiving, by a user equipment, a base station capability indication transmitted by a base station, where the base station capability indication indicates a capability of heterogeneous device-to-device communication transmission is supported by the base station;
receiving, by the user equipment through a first transmission channel established by the base station, device-to-device communication control information sent by the base station, where the first transmission channel is established in a mode network that is supported by the base station serving the user equipment, and is used to transmit the device-to-device communication control information to the user equipment, where the device-to-device communication control information is control signaling for controlling the user equipment to perform data exchange with another user equipment; and
performing, by the user equipment, transmission of a device-to-device communication signal with the another user equipment according to the device-to-device communication control information, where the device-to-device communication signal is data exchanged between the user equipment and the another user equipment.

According to another aspect, a user equipment is provided, where the user equipment includes:
a second capability receiving unit, configured to receive a base station capability indication transmitted by a base station, where the base station capability indication indicates a capability, of heterogeneous device-to-device communication transmission is supported by the base station;
a control information receiving unit, configured to receive, through a first transmission channel established by the base station, device-to-device communication control information sent by the base station, where the first transmission channel is established in a mode network that is supported by the base station serving the user equipment, and is used to transmit the device-to-device communication control information to the user equipment, where the device-to-device communication control information is control signaling for controlling the user equipment to perform data exchange with another user equipment; and
a signal transmitting unit, configured to perform transmission of a device-to-device communication signal with the another user equipment according to the device-to-device communication control information, where the device-to-device communication signal is data exchanged between the user equipment and the another user equipment.

According to still another aspect, a wireless communications system is provided, where the wireless communications system includes the base station described above and the user equipment described above.

In the embodiments of the present invention, after a base station and a user equipment exchange a supported capability of heterogeneous device-to-device communication transmission, the base station can establish a first transmission channel for device-to-device communication control information according to a user plane or a control plane of a mode network in which the user equipment is located, and transmit the device-to-device communication control information to the user equipment through the first transmission channel; and then communication can be performed between user equipments according to the device-to-device communication control information.

### BRIEF DESCRIPTION OF DRAWINGS

FIG. 1 is a schematic diagram of a typical D2D scenario;
FIG. 2 is a schematic diagram of a scenario in which wireless networks with multiple modes can cover in an overlapping manner;
FIG. 3 is a flowchart of implementing a device-to-device communication method according to an embodiment of the present invention;
FIG. 4 and FIG. 5 are schematic diagrams of two application scenarios of a device-to-device communication method according to an embodiment of the present invention;
FIG. 6 is a flowchart of implementing a device-to-device communication method according to another embodiment of the present invention;
FIG. 7 is a structural block diagram of a base station according to still another embodiment of the present invention; and
FIG. 8 is a structural block diagram of a user equipment according to yet another embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

In the embodiments of the present invention, after a base station and a user equipment exchange a supported capability of heterogeneous device-to-device communication transmission, the base station can establish a first transmission channel according to a user plane or a control plane of a mode network in which the user equipment is located, and transmit device-to-device communication control information to the user equipment through the first transmission channel; and then communication can be performed between user equipments according to the device-to-device communication control information.

The following describes implementation of the present invention in detail with reference to specific embodiments:

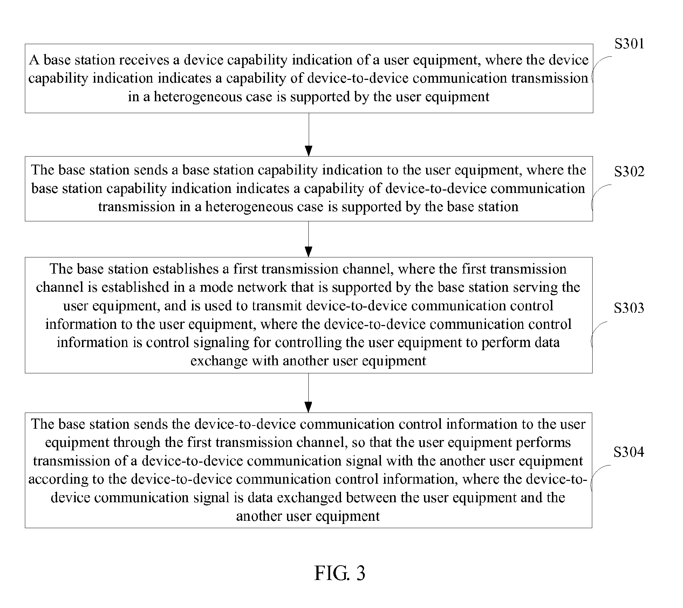

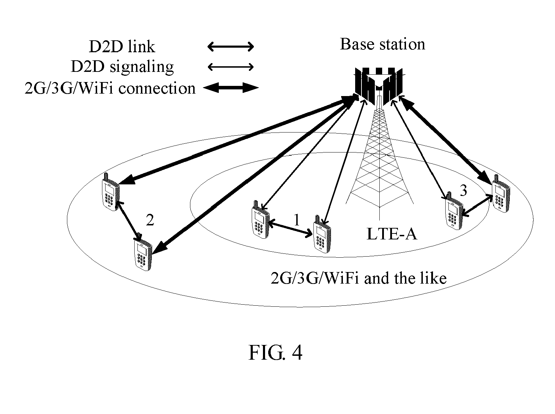

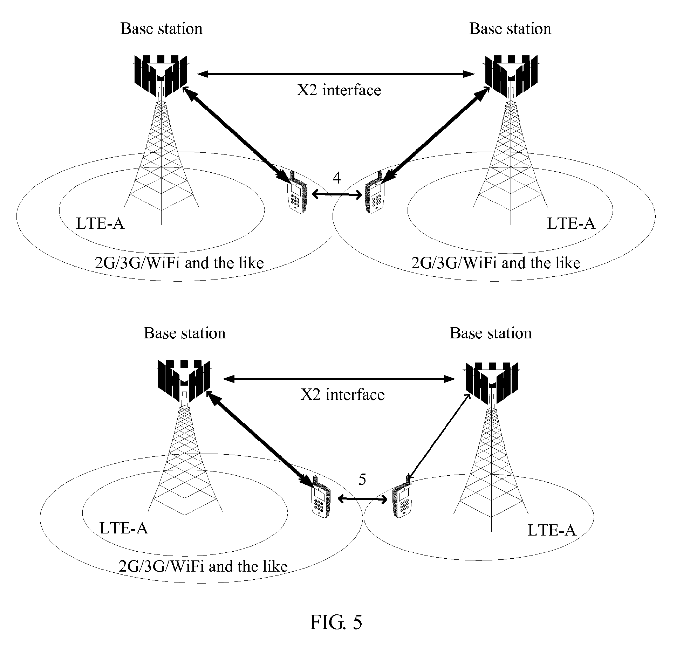

FIG. 3 shows an implementation process of a device-to-device communication method according to an embodiment of the present invention. Specific execution scenarios of the method can be shown in FIG. 4 and FIG. 5 separately. Base stations in FIG. 4 and FIG. 5 support coverage of both an LTE-A network and a 2G (GSM)/3G (UMTS) network.

Scenario 1 in FIG. 4 is conventional D2D communication; in this case, two UEs performing D2D communication are both within coverage of an LTE-A network, and therefore, D2D communication can be implemented according to an indication of control signaling. Scenario 2 in FIG. 4 is that: when two UEs performing D2D communication are both within coverage of a 2G/3G network and outside coverage of LTE-A, signaling of LTE-A cannot be directly transferred to a UE; however, because the UEs are still within the coverage of the 2G/3G network, the 2G/3G network can be used to perform transmission of D2D link control signaling. Scenario 3 in FIG. 4 and scenarios 4 and 5 in FIG. 5 are some relatively more complicated scenarios; and a basic idea is to transmit some D2D control information by using a network with another mode, so as to implement D2D transmission in a heterogeneous network. In scenario 3, one UE performing D2D communication is within coverage of an LTE-A network, and another UE is within coverage of a 2G/3G network. In scenario 4, one UE performing D2D communication is within coverage of a 2G/3G network of one base station, and another UE is within coverage of a 2G/3G network of another base station. In scenario 5, one UE performing D2D communication is within coverage of a 2G/3G network of one base station, and another UE is within coverage of an LTE-A network of another base station. Labels 1 to 5 in FIG.4 and FIG. 5 respectively indicate scenario 1 to scenario 5, and description of the method can be as follows:

S301: A base station receives a device capability indication of a user equipment, where the device capability indication indicates a capability of heterogeneous device-to-device communication transmission is supported by the user equipment.

In this embodiment, the user equipment may be a phone, a notebook computer, or the like, may also be another portable device, such as a tablet and a mobile wireless router; and the user equipment is outside coverage of an LTE/LTE-A or a subsequent enhanced protocol version network, for example, the user equipment is in a 2G/3G/WiFi network. The user equipment and the base station communicate a capability that multi-mode D2D transmission of multi-mode device-to-device communication is supported, that is, the user equipment and the base station need to know a capability of heterogeneous device-to-device communication transmission is supported by the other party, so as to support a heterogeneous device-to-device communication transmission mode. The capability of heterogeneous device-to-device communication transmission means that user equipments in a non LTE/LTE-A or a non subsequent enhanced protocol version network can directly perform data communication, and transmit data to each other.

A specific manner that the base station and the user equipment exchange information of the capability of heterogeneous device-to-device communication transmission may include:

The user equipment (User Equipment, UE) sends a device capability indication to the base station by using a capability reporting mechanism, to notify the base station of the capability of heterogeneous device-to-device communication transmission is supported by the UE. Certainly, an indication command (for example, user subscription information) sent by a core network may also be used to notify the base station of the capability of heterogeneous device-to-device communication transmission is supported by the UE. The device capability indication may be an explicit independent identifier, or may be an implicit independent identifier, which is indicated by another cell that can represent the capability of the UE, for example, a multi-mode transmission capability identifier and a multi-mode relay transmission capability identifier.

S302: The base station sends a base station capability indication to the user equipment, where the base station capability indication indicates a capability of heterogeneous device-to-device communication transmission is supported by the base station.

In this embodiment, the base station may use a broadcast message or individual dedicated signaling to notify each user equipment UE of a capability that the base station supports multi-mode device-to-device communication transmission. The base station capability indication may be an explicit independent identifier, or may be an implicit implicit, which is indicated by another cell that can represent the capability of the UE, for example, a multi-mode transmission capability identifier and a multi-mode relay transmission capability identifier.

It should be noted that there is no limitation on a sequence of S301 and S302 during execution.

S303: The base station establishes a first transmission channel, where the first transmission channel is established in a mode network that is supported by the base station serving the user equipment, and is used to transmit device-to-device communication control information to the user equipment, where the device-to-device communication control information is control signaling for controlling the user equipment to perform data exchange with another user equipment.

In this embodiment, if D2D signal transmission in which a D2D transmission capability is supported needs to be initiated, the first transmission channel through which the D2D control information for supporting the D2D transmission capability may be transmitted needs to be established between the base station and each user equipment. According to different situations, establishment of the first transmission channel may be initiated according to a first indication of the user equipment, or be initiated by the base station. The base station can establish the first transmission channel according to a control plane connection, a user plane connection, or a wireless connection. Different cases are separately discussed as follows:

1. If the D2D control information is transmitted by using a control plane of a network of another mode, where the another mode specifically refers to a mode of a network in which the user equipment is located, and the another mode is a network mode different from LTE/LTE-A or a subsequent enhanced protocol version, including 2G/3G or the like, the base station uses a control plane connection channel between the base station and the user equipment as the first transmission channel, uses the first transmission channel to transmit the D2D control information, and carries an identifier in transmitted control signaling, where the identifier is used to indicate that the control signaling carries the device-to-device communication control information.

The control plane connection is a connection used to transmit signaling, and may also be called a signaling connection. The control plane connection corresponds to one or more bearers on a wireless air interface, and these bearers are called signaling radio bearers (Signalling Radio Bearer, SRB) or signaling bearers for short.

2. If the D2D control information is transmitted by using a user plane of a network of another mode, where the another mode specifically refers to a mode of a network in which the user equipment is located, and the another mode is a network mode different from LTE/LTE-A or a subsequent enhanced protocol version, including 2G/3G, the base station establishes one or more new user plane bearers, selects one user plane bearer from the multiple new user plane bearers as the first transmission channel, and notifies the user equipment of the first transmission channel, where the first transmission channel is used to transmit a dedicated data radio bearer (Data Radio Bearer, DRB) of the D2D control information, and the base station selects one user plane bearer from the multiple new user plane bearers as the first transmission channel according to a quality of service QoS requirement and data volume of exchange signaling between the base station and the user equipment; or, the base station selects one user plane bearer from one or more existing user plane bearers of the user equipment as the first transmission channel, and carries an identifier in a packet transmitted through the first transmission channel, where the identifier is used to indicate that the packet carries the device-to-device communication control information, so as to differentiate from other user plane data of the user equipment UE, and the identifier may be an IP address carried in the packet. The base station selects one user plane bearer from the multiple new user plane bearers as the first transmission channel according to a quality of service QoS requirement and data volume of exchange signaling between the base station and the user equipment.

Specifically, an existing mechanism that a base station at a 2G/3G network side initiates establishment of a bearer can be used to establish a new dedicated user plane bearer.

A user plane includes one or more bearers on an air interface, and these bearers are called user plane bearers or may also be called data radio bearers (Data Radio Bearer, DRB).

3. For a network mode in which a control plane and a user plane are not differentiated on a wireless air interface, for example, a GSM network and WiFi/WiMAX, when the user equipment is in the network mode, the base station establishes one or more new wireless connections and selects one wireless connection from the multiple new wireless connections as the first transmission channel; or, the base station selects one wireless connection from one or more existing wireless connections of the user equipment as the first transmission channel, and carries an identifier in a packet transmitted through the existing wireless connection, where the identifier is used to indicate that the packet carries the device-to-device communication control information. The base station selects one user plane bearer from the multiple new user plane bearers as the first transmission channel according to a quality of service QoS requirement and data volume of exchange signaling between the base station and the user equipment.

The wireless connection may refer to a specific radio time and frequency resource, for example, a channel, a timeslot, or the like.

S304: The base station sends the device-to-device communication control information to the user equipment through the first transmission channel, so that the user equipment performs transmission of a device-to-device communication signal with the another user equipment according to the device-to-device communication control information, where the device-to-device communication signal is data exchanged between the user equipment and the another user equipment.

In this embodiment, after a channel through which the device-to-device communication control information is transmitted is established between the base station and the user equipment, the base station can transmit the device-to-device communication control information to the user equipment through the channel, and the user equipment can perform transmission of a device-to-device communication signal with the another user equipment according to the received device-to-device communication control information. The device-to-device communication control information is information for controlling device-to-device communication D2D signal transmission in the LTE/LTE-A or the subsequent enhanced protocol version network, including: one piece or a combination of layer 2 signaling and layer 3 signaling for controlling the D2D signal transmission, and layer 1 information for controlling the D2D signal transmission, including one piece or a combination of: channel quality information, time synchronization information, frequency synchronization information, power information, and scheduling information. Layer 1 refers to a physical layer, layer 2 refers to a MAC layer, and layer 3 refers to an RRC layer. The device-to-device communication signal refers to data transmitted between user equipments when the user equipments directly perform data communication.

In this embodiment, after a base station and a user equipment exchange a supported capability of heterogeneous device-to-device communication transmission, the base station can establish a first transmission channel according to a mode network in which the user equipment is located, and transmit device-to-device communication control information to the user equipment through the first transmission channel; and then communication can be performed between user equipments according to the device-to-device communication control information. The mode network in which the user equipment is located may be another mode network different from an LTE/LTE-A or a subsequent enhanced protocol version network. Therefore, in the embodiment of the present invention, although the user equipment is in a heterogeneous network different from the LTE/LTE-A or the subsequent enhanced protocol version network, the user equipment still can support transmission of a device-to-device communication signal.

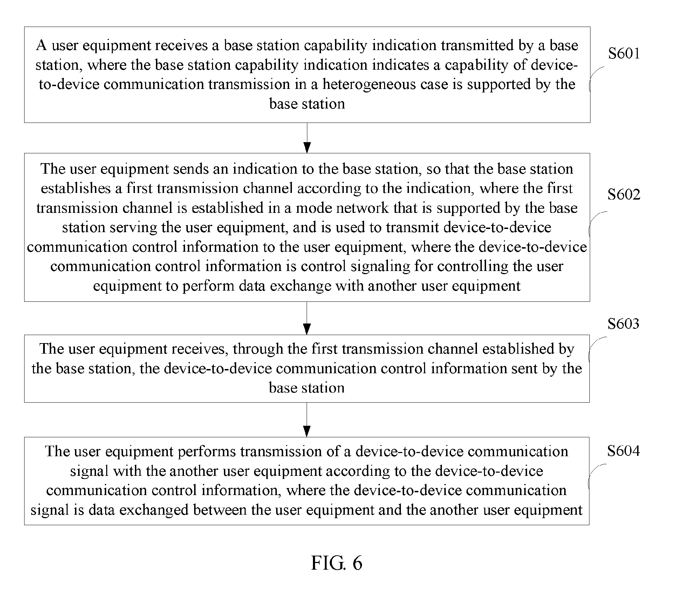

FIG. 6 shows an implementation process of a device-to-device communication method according to another embodiment of the present invention. Specific execution scenarios of the method can be shown in FIG. 4 and FIG. 5 separately. The method may be as follows:

In step S601, a user equipment receives a base station capability indication transmitted by a base station, where the base station capability indication indicates a capability of heterogeneous device-to-device communication transmission is supported by the base station.

By performing step S601, the user equipment can learn the capability of heterogeneous device-to-device communication transmission is supported by the base station.

In step S602, the user equipment sends a first indication to the base station, so that the base station establishes a first transmission channel according to the first indication, where the first transmission channel is established in a mode network that is supported by the base station serving the user equipment, and is used to transmit device-to-device communication control information to the user equipment, where the device-to-device communication control information is control signaling for controlling the user equipment to perform data exchange with another user equipment, and the first indication includes signaling that instructs the base station to establish the first transmission channel.

As an embodiment of the present invention, before step S602, the method may further include the following steps:

The user equipment sends a device capability indication to the base station, where the device capability indication indicates a capability of heterogeneous device-to-device communication transmission is supported by the user equipment. By performing this step, the base station can learn that the user equipment supports the capability of heterogeneous device-to-device communication transmission. The device capability indication may also be sent to the base station by using a core network, which is not limited herein.

In step S603, the user equipment receives, through the first transmission channel established by the base station, the device-to-device communication control information sent by the base station.

In this embodiment, after the base station and the user equipment learn a capability of heterogeneous device-to-device communication transmission is supported by the other party, the user equipment sends an indication to the base station; after receiving the indication, the base station establishes the first transmission channel according to a mode of a network in which the user equipment is located and based on the network with the mode, and transmits the device-to-device communication control information to the user equipment through the first transmission channel; and then communication can be performed between user equipments that receive the device-to-device communication control information and according to the device-to-device communication control information. The device-to-device communication control information is information for controlling device-to-device communication D2D signal transmission in an LTE/LTE-A or a subsequent enhanced protocol version network, including: one piece or a combination of layer 2 signaling and layer 3 signaling for controlling the D2D signal transmission, and layer 1 information for controlling the D2D signal transmission, including one piece or a combination of: channel quality information, time synchronization information, frequency synchronization information, power information, and scheduling information. Layer 1 refers to a physical layer, layer 2 refers to a MAC layer, and layer 3 refers to an RRC layer.

In step S604, the user equipment performs transmission of a device-to-device communication signal with the another user equipment according to the device-to-device communication control information, where the device-to-device communication signal is data exchanged between the user equipment and the another user equipment.

In this embodiment, after a base station and a user equipment exchange a supported capability of heterogeneous device-to-device communication transmission, the base station can establish a first transmission channel according to a mode network in which the user equipment is located, and transmit device-to-device communication control information to the user equipment through the first transmission channel; and then communicate can be performed between user equipments according to the device-to-device communication control information. The mode network in which the user equipment is located may be another mode network different from an LTE/LTE-A or a subsequent enhanced protocol version network. Therefore, in the embodiment of the present invention, although the user equipment is in a heterogeneous network different from the LTE/LTE-A or the subsequent enhanced protocol version network, the user equipment still can support transmission of a device-to-device communication signal.

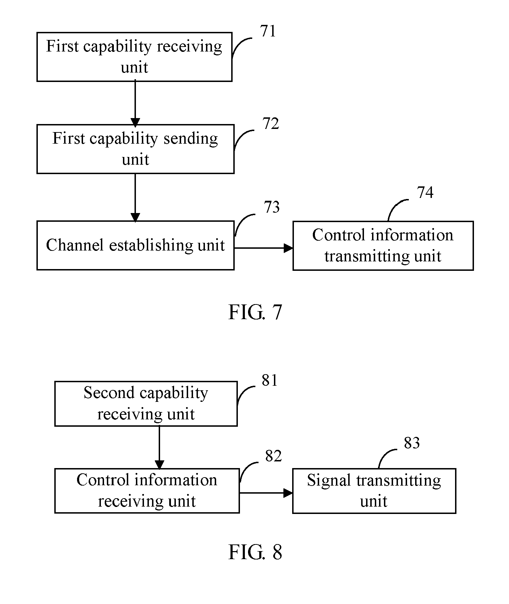

FIG. 7 is a structural block diagram of a base station according to still another embodiment of the present invention. In this embodiment, the base station and a user equipment can form a wireless communications system, where the base station includes: a first capability receiving unit 71, a first capability sending unit 72, a channel establishing unit 73, and a control information transmitting unit 74.

The first capability receiving unit 71 is configured to receive a device capability indication of a user equipment, where the device capability indication indicates a capability of heterogeneous device-to-device communication transmission is supported by the user equipment; and the capability receiving unit 71 receives the device capability indication of the user equipment that is transmitted to the base station by the user equipment and/or a core network.

The first capability sending unit 72 is configured to send a base station capability indication to the user equipment, where the base station capability indication indicates a capability of heterogeneous device-to-device communication transmission is supported by the base station.

The channel establishing unit 73 is configured to establish a first transmission channel, where the first transmission channel is established in a mode network that is supported by the base station serving the user equipment, and is used to transmit device-to-device communication control information to the user equipment, where the device-to-device communication control information is control signaling for controlling the user equipment to perform data exchange with another user equipment; and the channel establishing unit 73 may establish the first transmission channel according to an indication initiated by the user equipment, or the base station may initiate establishment of the first transmission channel by itself.

The control information transmitting unit 74 is configured to send the device-to-device communication control information to the user equipment through the first transmission channel, so that the user equipment performs transmission of a device-to-device communication signal with the another user equipment according to the device-to-device communication control information, where the device-to-device communication signal is data exchanged between the user equipment and the another user equipment.

Specifically, the channel establishing unit 73 includes:
a first channel establishing module, configured to use a control plane connection with the user equipment as the first transmission channel, and carry an identifier in control signaling transmitted through the first transmission channel, where the identifier is used to indicate that the control signaling carries the device-to-device communication control information.
Specifically, the channel establishing unit 73 includes:
   a second channel establishing module, configured to establish one or more new user plane bearers and select one user plane bearer from the multiple new user plane bearers as the first transmission channel.

Specifically, the channel establishing unit 73 includes:
a third channel establishing module, configured to select one user plane bearer from one or more existing user plane bearers of the user equipment as the first transmission channel, and carry an identifier in a packet transmitted through the first transmission channel, where the identifier is used to indicate that the packet carries the device-to-device communication control information.

Specifically, the channel establishing unit 73 includes:
a fourth channel establishing module, configured to establish one or more new wireless connections and select one wireless connection from the new wireless connections as the first transmission channel.

Specifically, the channel establishing unit 73 includes:
a fifth channel establishing module, configured to select one wireless connection from one or more existing wireless connections of the user equipment as the first transmission channel, and carry an identifier in a packet transmitted through the first transmission channel, where the identifier is used to indicate that the packet carries the device-to-device communication control information.

For details about an execution situation of each unit in the base station, reference may be made to description of the method shown in FIG. 3, which is not further described herein.

FIG. 8 is a structural block diagram of a user equipment according to yet another embodiment of the present invention. In this embodiment, the user equipment and a base station can form a wireless communications system, where the user equipment includes: a second capability receiving unit 81, a control information receiving unit 82, and a signal transmitting unit 83.

The second capability receiving unit 81 is configured to receive a base station capability indication transmitted by a base station, where the base station capability indication indicates a capability of heterogeneous device-to-device communication transmission is supported by the base station.

The control information receiving unit 82 is configured to receive, through a first transmission channel established by the base station, device-to-device communication control information sent by the base station, where the first transmission channel is established in a mode network that is supported by the base station serving the user equipment, and is used to transmit the device-to-device communication control information to the user equipment, where the device-to-device communication control information is control signaling for controlling the user equipment to perform data exchange with another user equipment.

The signal transmitting unit 83 is configured to perform transmission of a device-to-device communication signal with the another user equipment according to the device-to-device communication control information, where the device-to-device communication signal is data exchanged between the user equipment and the another user equipment.

Further, the user equipment further includes: an indication sending unit, where the unit is configured to send a first indication to the base station, so that the base station establishes the first transmission channel according to the first indication.

Further, the user equipment further includes: a second capability sending unit, where the unit is configured to send a device capability indication to the base station, where the device capability indication indicates a capability of heterogeneous device-to-device communication transmission is supported by the user equipment.

For details about an execution situation of each unit in the user equipment, reference may be made to description of the method shown in FIG. 6, which is not further described herein.

It should be noted that, in the foregoing system embodiments, the included units are classified merely according to functional logic, but the present invention is not limited to the above classification, as long as corresponding functions can be implemented. In addition, the specific names of the functional units are merely for facilitating the differentiation between each other, but are not intended to limit the protection scope of the present invention.

In addition, a person of ordinary skill in the art may understand that all or a part of the steps of the methods in the embodiments may be implemented by a program instructing relevant hardware. A corresponding program may be stored in a computer readable storage medium, where the storage medium includes a ROM/RAM, a magnetic disk, an optical disc, or the like.

The foregoing descriptions are merely embodiments of the present invention, but are not intended to limit the present invention. Any modification, equivalent replacement, or improvement made without departing from the spirit and principle of the present invention shall fall within the protection scope of the present invention.

## Claims

1. A device-to-device communication method, wherein the method comprises:
receiving, by a base station, a device capability indication of a user equipment, wherein the device capability indication indicates a capability of heterogeneous device-to-device communication transmission is supported by the user equipment;
sending, by the base station, a base station capability indication to the user equipment, wherein the base station capability indication indicates a capability of heterogeneous device-to-device communication transmission is supported by the base station;
establishing, by the base station, a first transmission channel, wherein the first transmission channel is established in a mode network that is supported by a base station serving the user equipment, and is used to transmit device-to-device communication control information to the user equipment, wherein the device-to-device communication control information is a control signaling for controlling the user equipment to perform data exchange with another user equipment; and
sending, by the base station, the device-to-device communication control information to the user equipment through the first transmission channel, for the user equipment performing transmission of a device-to-device communication signal with the another user equipment according to the device-to-device communication control information, wherein the device-to-device communication signal is data exchanged between the user equipment and the another user equipment.

2. The method according to claim 1, wherein the establishing, by the base station, a first transmission channel comprises:
establishing, by the base station, the first transmission channel according to a first indication initiated by the user equipment, or initiating, by the base station, establishment of the first transmission channel.

3. The method according to claim 2, wherein the establishing, by the base station, the first transmission channel according to an indication initiated by the user equipment, or initiating, by the base station, establishment of the first transmission channel specifically is:
taking, by the base station, a control plane connection with the user equipment as the first transmission channel, and carrying an identifier in a control signaling transmitted through the first transmission channel, wherein the identifier is used to indicate that the control signaling carries the device-to-device communication control information.

4. The method according to claim 2, wherein the establishing, by the base station, the first transmission channel according to an indication initiated by the user equipment, or initiating, by the base station, establishment of the first transmission channel specifically is:
establishing, by the base station, one or more new user plane bearers and selecting one user plane bearer from the multiple new user plane bearers as the first transmission channel; or selecting, by the base station, one user plane bearer from one or more existing user plane bearers of the user equipment as the first transmission channel, and carrying an identifier in a packet transmitted through the first transmission channel, wherein the identifier is used to indicate that the packet carries the device-to-device communication control information.

5. The method according to claim 2, wherein the establishing, by the base station, the first transmission channel according to an indication initiated by the user equipment, or initiating, by the base station, establishment of the first transmission channel specifically is:
establishing, by the base station, one or more new wireless connections and selecting one wireless connection from the new wireless connections as the first transmission channel; or selecting, by the base station, one wireless connection from one or more existing wireless connections of the user equipment as the first transmission channel, and carrying an identifier in a packet transmitted through the first transmission channel, wherein the identifier is used to indicate that the packet carries the device-to-device communication control information.

6. The method according to any one of claims 1 to 5, wherein the receiving, by a base station, a device capability indication of a user equipment comprises:
receiving, by the base station, the device capability indication of the user equipment that is transmitted to the base station by the user equipment and/or a core network.

7. Abase station, wherein the base station comprises:
a first capability receiving unit, configured to receive a device capability indication of a user equipment, wherein the device capability indication indicates a capability of heterogeneous device-to-device communication transmission is supported by the user equipment;
a first capability sending unit, configured to send a base station capability indication to the user equipment, wherein the base station capability indication indicates a capability of heterogeneous device-to-device communication transmission is supported by the base station ;
a channel establishing unit, configured to establish a first transmission channel, wherein the first transmission channel is established in a mode network that is supported by the base station serving the user equipment, and is used to transmit device-to-device communication control information to the user equipment, wherein the device-to-device communication control information is control signaling for controlling the user equipment to perform data exchange with another user equipment; and
a control information transmitting unit, configured to send the device-to-device communication control information to the user equipment through the first transmission channel, for the user equipment performing transmission of a device-to-device communication signal with the another user equipment according to the device-to-device communication control information, wherein the device-to-device communication signal is data exchanged between the user equipment and the another user equipment.

8. The base station according to claim 7, wherein the channel establishing unit establishes the first transmission channel according to a first indication initiated by the user equipment, or the base station initiates establishment of the first transmission channel.

9. The base station according to claim 8, wherein the channel establishing unit comprises:
a first channel establishing module, configured to use a control plane connection with the user equipment as the first transmission channel, and carry an identifier in control signaling transmitted through the first transmission channel, wherein the identifier is used to indicate that the control signaling carries the device-to-device communication control information.

10. The base station according to claim 8, wherein the channel establishing unit comprises:
a second channel establishing module, configured to establish one or more new user plane bearers and select one user plane bearer from the multiple new user plane bearers as the first transmission channel.

11. The base station according to claim 8, wherein the channel establishing unit comprises:
a third channel establishing module, configured to select one user plane bearer from one or more existing user plane bearers of the user equipment as the first transmission channel, and carry an identifier in a packet transmitted through the first transmission channel, wherein the identifier is used to indicate that the packet carries the device-to-device communication control information.

12. The base station according to claim 8, wherein the channel establishing unit comprises:
a fourth channel establishing module, configured to establish one or more new wireless connections and select one wireless connection from the new wireless connections as the first transmission channel.

13. The base station according to claim 8, wherein the channel establishing unit comprises:
a fifth channel establishing module, configured to select one wireless connection from one or more existing wireless connections of the user equipment as the first transmission channel, and carry an identifier in a packet transmitted through the first transmission channel, wherein the identifier is used to indicate that the packet carries the device-to-device communication control information.

14. The base station according to any one of claims 8 to 13, wherein the first capability receiving unit receives the device capability indication of the user equipment that is transmitted to the base station by the user equipment and/or a core network.

15. A device-to-device communication method, wherein the method comprises:
receiving, by a user equipment, a base station capability indication transmitted by a base station, wherein the base station capability indication indicates a capability of heterogeneous device-to-device communication transmission is supported by the base station;
receiving, by the user equipment through a first transmission channel established by the base station, device-to-device communication control information sent by the base station, wherein the first transmission channel is established in a mode network that is supported by the base station serving the user equipment, and is used to transmit the device-to-device communication control information to the user equipment, wherein the device-to-device communication control information is control signaling for controlling the user equipment to perform data exchange with another user equipment; and
performing, by the user equipment, transmission of a device-to-device communication signal with the another user equipment according to the device-to-device communication control information, wherein the device-to-device communication signal is data exchanged between the user equipment and the another user equipment.

16. The method according to claim 15, wherein before the receiving, by the user equipment through a first transmission channel established by the base station, device-to-device communication control information sent by the base station, the method further comprises:
sending, by the user equipment, a first indication to the base station, so that the base station establishes the first transmission channel according to the first indication.

17. The method according to claim 15 or 16, wherein before the receiving, by the user equipment through a first transmission channel established by the base station, device-to-device communication control information sent by the base station, the method further comprises:
sending, by the user equipment, a device capability indication to the base station, wherein the device capability indication indicates a capability which of heterogeneous device-to-device communication transmission is supported by the user equipment.

18. A user equipment, wherein the user equipment comprises:
a second capability receiving unit, configured to receive a base station capability indication transmitted by a base station, wherein the base station capability indication indicates a capability of heterogeneous device-to-device communication transmission is supported by the base station;
a control information receiving unit, configured to receive, through a first transmission channel established by the base station, device-to-device communication control information sent by the base station, wherein the first transmission channel is established in a mode network that is supported by the base station serving the user equipment, and is used to transmit the device-to-device communication control information to the user equipment, wherein the device-to-device communication control information is control signaling for controlling the user equipment to perform data exchange with another user equipment; and
a signal transmitting unit, configured to perform transmission of a device-to-device communication signal with the another user equipment according to the device-to-device communication control information, wherein the device-to-device communication signal is data exchanged between the user equipment and the another user equipment.

19. The user equipment according to claim 18, wherein the user equipment further comprises:
an indication sending unit, configured to send a first indication to the base station, so that the base station establishes the first transmission channel according to the first indication.

20. The user equipment according to claim 17 or 18, wherein the user equipment further comprises:
a second capability sending unit, configured to send a device capability indication to the base station, wherein the device capability indication indicates a capability of heterogeneous device-to-device communication transmission is supported by the user equipment.
